# EUROPEAN PATENT SPECIFICATION

(11) **EP 1 574 692 B1**
(45) Date of publication and mention of the grant of the patent: **11.04.2007**
(21) Application number: 05003569.0
(22) Date of filing: 18.02.2005
(51) Int. Cl.: F02D 41/06, F02N 17/06, F02N 17/08, F02N 17/00, F02D 41/34, F02N 11/04, F02D 41/00, F01L 13/02

(54) **Engine start control system**
Motorstartsteuerungssystem
Système de commande de démarrage d'un moteur

(30) Priority: 08.03.2004 JP 2004063922
(43) Date of publication of application: 14.09.2005
(73) Proprietor: HONDA MOTOR CO., Ltd., Tokyo (JP)
(72) Inventor: Tanaka, Hiroshi, 1-4-1 Chuo, Wako-shi, Saitama (JP)
(74) Representative: Rupp, Christian

(56) References cited:
- WO-A-02/35087
- PATENT ABSTRACTS OF JAPAN vol. 1998, no. 11, 30 September 1998 (1998-09-30) & JP 10 148142 A (HONDA MOTOR CO LTD), 2 June 1998 (1998-06-02)
- PATENT ABSTRACTS OF JAPAN vol. 1995, no. 06, 31 July 1995 (1995-07-31) & JP 07 071350 A (NIPPONDENSO CO LTD), 14 March 1995 (1995-03-14)
- PATENT ABSTRACTS OF JAPAN vol. 2000, no. 17, 5 June 2001 (2001-06-05) & JP 06 064451 A (LAIMBOECK FRANZ; SPIELMANN CHRISTOPH; PIOCK WALTER; SCHOEGGL PETER), 8 March 1994 (1994-03-08)

## Description

The present invention relates to an engine start control system, and more particularly to an engine start control system having a function of reversely rotating a crankshaft of an engine to a predetermined position after stopping the engine and then cranking from this predetermined position at starting the engine to thereby improve the startability of the engine.

Conventionally, a starter motor and a generator for an internal combustion engine are individually mounted. On the other hand, Patent Document 1 discloses a multiphase AC generator serving also as a starter motor (ACG starter) having the integrated functions of the generator and the starter motor.

A crank angle where a piston reaches a start point in an initial compression stroke (compression bottom dead center) at starting an internal combustion engine (which crank angle will be hereinafter referred to as "approach angle") is determined by a stop position of the crankshaft upon stoppage of the engine. Accordingly, there is a case that a sufficient approach angle cannot be ensured at the next starting of the engine as depending on the stop position of the crankshaft, so that a rotational speed (angular velocity) of the crankshaft is not enough for the piston to come beyond an initial compression top dead center, and the engine is not smoothly started. Under these circumstances, Patent Documents 2 and 3 disclose a technique of reversely rotating the crankshaft back to a predetermined position before starting the engine and starting the engine from this predetermined position to thereby improve the startability of the engine.
Japanese Patent Laid-open No. Hei 10-148142
Japanese Patent Laid-open No. Hei 6-64451
Japanese Patent Laid-open No. Hei 7-71350

In an engine having a fuel injection valve, the fuel injection timing depends on a rotational angle of the crankshaft. Accordingly, when a fuel injection timing signal is generated during reverse rotation of the engine, there is a possibility that fuel may be injected during the reverse rotation because it is not possible to determine whether the rotational direction of the engine at this time is normal or reverse. Similarly, when an ignition timing signal is generated during the reverse rotation, there is a possibility that an ignition operation may be performed during the reverse rotation because it is not possible to determine whether the rotational direction of the engine at this time is normal or reverse.

It is therefore an object of the present invention to provide an engine start control system which can inhibit fuel injection and engine ignition when the engine is reversely rotated.

In accordance with the present invention, there is provided an engine start control system having a function of reversely rotating a crankshaft of an engine to a predetermined position after stopping the engine for the purpose of standby for the next engine start, the engine start control system comprising a fuel injection device for injecting fuel when the crankshaft reaches a predetermined angle; an ignition device for igniting the engine with predetermined timing after fuel injection by the fuel injection device; a multiphase AC electric device functioning as a starter motor and a generator; a rotor sensor for detecting a rotor position of the multiphase AC electric device to output multiple phase signals; rotational direction determining means for determining a rotational direction of the engine according to the phase signals output from the rotor sensor; and injection inhibiting means for inhibiting the fuel injection when the engine is reversely rotated.

According to the present invention, the following effects can be obtained.
(1) Even when a fuel injection timing signal is generated during reverse rotation of the engine, no fuel is injected. Accordingly, it is possible to prevent that an air-fuel mixture may become overrich during the normal rotation subsequent to this preliminary reverse rotation.
(2) Since the fuel injection device is not operated during reverse rotation of the engine, undue power consumption of a battery can be prevented.
(3) Since the ignition device is not operated during reverse rotation of the engine, undue power consumption of the battery can be further prevented.
(4) Whether the rotational direction of the engine is normal or reverse is determined according to the output signals from the rotor sensor already provided for excitation of the multiphase AC electric device. Accordingly, it is not necessary to independently provide a dedicated sensor, thereby obtaining advantages in layout and cost.

FIG. 1 is a general side view of a scooter type motorcycle to which the present invention is applied.
FIG. 2 is a block diagram of an engine start control system according to the present invention.
FIG. 3 is a schematic diagram showing switching conditions of operation modes in an automatic idling stop function.
FIG. 4 is a flowchart of "motor stage determination processing".
FIG. 5 is a timing chart of the "motor stage determination processing".
FIG. 6 is a table showing the relation between the combination of phase signals and the motor stage.
FIG. 7 is a flowchart of "normal/reverse rotation determination processing".
FIG. 8 is a flowchart of "fuel injection stage determination processing".
FIG. 9 is a timing chart of the "fuel injection stage determination processing".

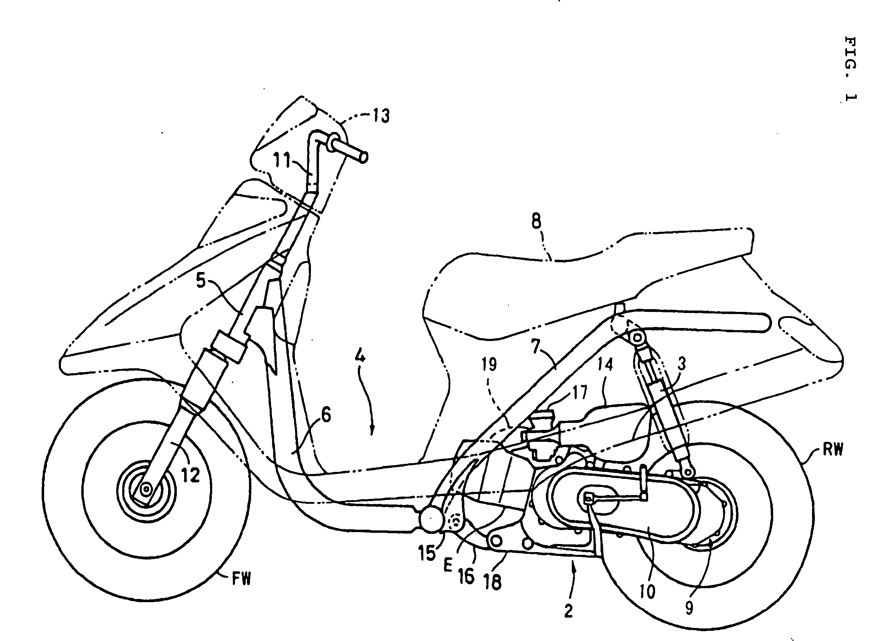

A preferred embodiment of the present invention will now be described in detail with reference to the drawings. FIG. 1 is a general side view of a scooter type motorcycle to which the engine start control system of the present invention is applied.

Front and rear portions of a vehicle body are connected together through a floor portion 4 low in height. A body frame forming the framework of the vehicle body is composed generally of a down tube 6 and a main pipe 7. A fuel tank and a luggage box (both not shown) are supported to the main pipe 7, and a seat 8 is arranged on the fuel tank and the luggage box.

At the front portion of the vehicle body, a handle 11 is pivotably supported to a steering head 5 so as to extend upward therefrom, and a front fork 12 is pivotably supported to the steering head 5 so as to extend downward therefrom. A front wheel FW is rotatably supported to the front fork 12 at its lower ends. An upper portion of the handle 11 is covered with a handle cover 13 serving also as a meter panel. A bracket 15 projects from the main pipe 7 at the lower end of its rising portion, and a hanger bracket 18 of a swing unit 2 is pivotably connected through a link member 16 to the bracket 15.

A single-cylinder internal combustion engine E is mounted on the swing unit 2 at its front portion. A belt-type continuously variable transmission 10 is provided behind the engine E so as to extend rearward therefrom. A speed reducing mechanism 9 is provided at a rear portion of the transmission 10 through a centrifugal clutch, and a rear wheel RW is rotatably supported to the speed reducing mechanism 9. A rear suspension 3 is interposed between an upper end of the speed reducing mechanism 9 and an upper bent portion of the main pipe 7. An intake pipe 19 extends from the engine E, and a carburetor 17 and an air cleaner 14 are provided at the front portion of the swing unit 2 in such a manner that the carburetor 17 is connected to the intake pipe 19 and the air cleaner 14 is connected to the carburetor 17.

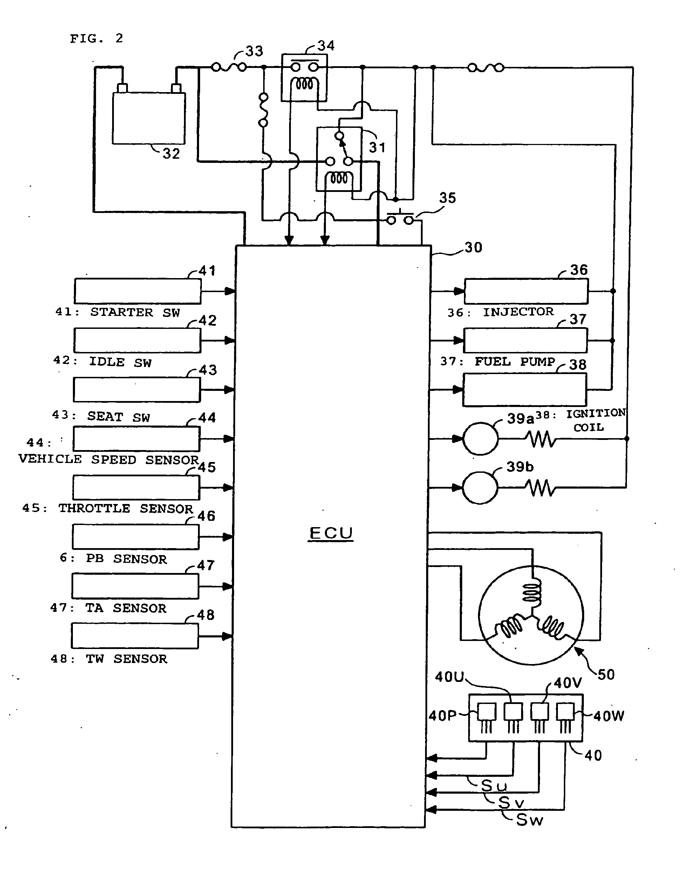

FIG. 2 is a block diagram showing the configuration of an engine start control system according to the present invention. The engine start control system has an engine reverse rotation function of reversely rotating a crankshaft to a predetermined position after stopping the engine for the purpose of standby for the next engine start, and also has an automatic idling stop function of stopping the engine in response to a predetermined vehicle stop condition and thereafter restarting the engine in response to a predetermined vehicle start operation.

An AC generator (ACG starter) 50 serving also as a starter is connected to an ECU 30. A drive current is supplied from a battery 32 through a starter relay 31 to the ACG starter 50. Further, a drive current is supplied from the battery 32 through a main fuse 33 and a main relay 34 to an injector 36, a fuel pump 37, and an ignition coil 38 and also to a standby indicator 39a and an alarm indicator 39b flashing in an "automatic stop and start mode" to be hereinafter described. The main relay 34 is activated by a main switch 35.

The ACG starter 50 is connected to the crankshaft of the engine, and a rotor position in the ACG starter 50, i.e., a crank angle is detected by a U-phase sensor 40U, V-phase sensor 40V, and W-phase sensor 40W mounted in a rotor sensor unit 40. Further, a PCB sensor 40P for detecting a compression top dead center and an exhaust top dead center is also mounted in the rotor sensor unit 40.

Connected also to the ECU 30 are various switches and sensors including a starter switch 41 for starting the engine, an idle switch 42 for manually permitting or limiting the idling of the engine, a seat switch 43 for detecting whether or not an operator is sitting on the seat 8, a vehicle speed sensor 44 for detecting a running speed of the vehicle, a throttle sensor 45 for detecting a throttle opening θth, a PB sensor 46 for detecting an intake vacuum (PB), a TA sensor 47 for detecting an atmospheric air temperature, and a TW sensor 48 for detecting a cooling water temperature.

The automatic idling stop function includes an operation mode in which the idling is permitted (which mode will be hereinafter referred to as "start and idle switch (SW) mode") and an operation mode in which the idling is limited (or inhibited) (which mode will be hereinafter referred to as "automatic stop and start mode").

In the "start and idle switch (SW) mode", the idling is temporarily permitted after turning on the main switch to next initially start the engine for the purpose of warming up at starting the engine. Further, the idling is also permitted by the operator's intention (the manual operation of turning on the idle switch 42) in the condition except the initial engine start. In the "automatic stop and start mode", the engine is automatically stopped in response to a predetermined vehicle stop condition, and is thereafter automatically restarted in response to a predetermined vehicle start operation, e.g., a throttle grip opening operation, thereby allowing the vehicle to start.

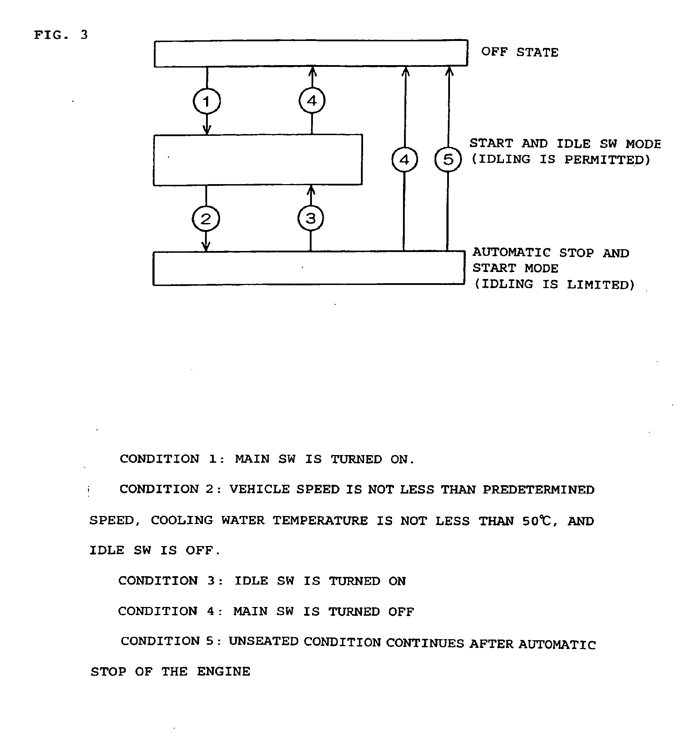

FIG. 3 is a schematic diagram showing switching conditions of the above operation modes. When the main switch 35 is turned on (Condition 1 is satisfied), the "start and idle SW mode" is started. When a vehicle speed not lower than a predetermined speed (e.g., 10 km/h) is detected, a cooling water temperature not lower than a predetermined temperature (e.g., a temperature at which the warming-up is estimated to have been completed) is detected, and the idle switch 42 is off in the "start and idle SW mode" (Condition 2 is satisfied), the "automatic stop and start mode" is started.

When the idle switch 42 is turned on in the "automatic stop and start mode" (Condition 3 is satisfied), the operation mode is returned from the "automatic stop and start mode" to the "start and idle SW mode". When the main switch 35 is turned off both in the "automatic stop and start mode" and in the "start and idle SW mode" (Condition 4 is satisfied), the operation mode becomes an off state. Further, also when the unseated condition (off state of the seat switch) continues for a predetermined time period after automatic stop of the engine in the "automatic stop and start mode" (Condition 5 is satisfied), the operation mode becomes an off state.

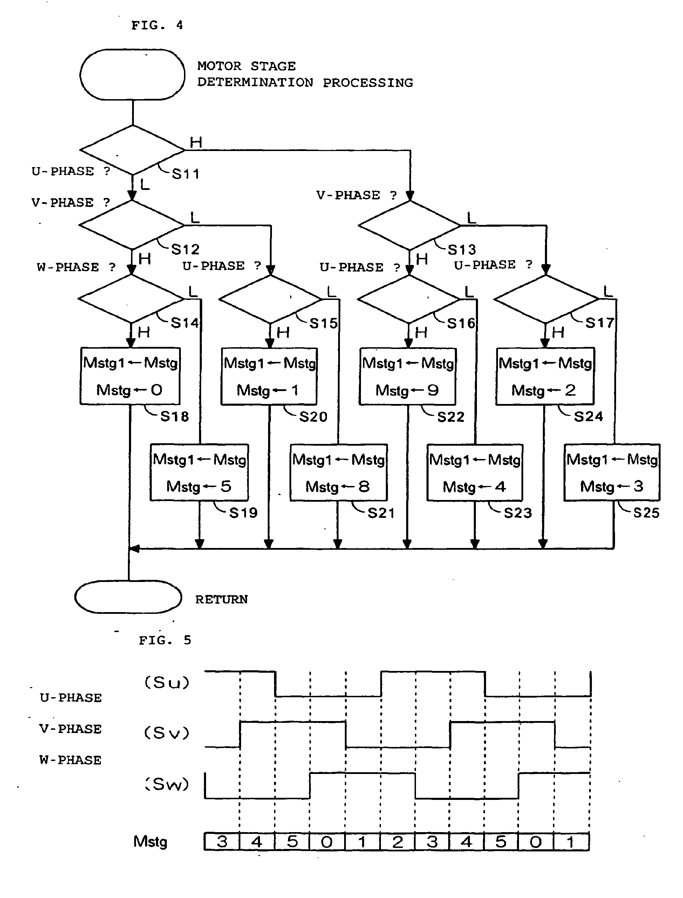

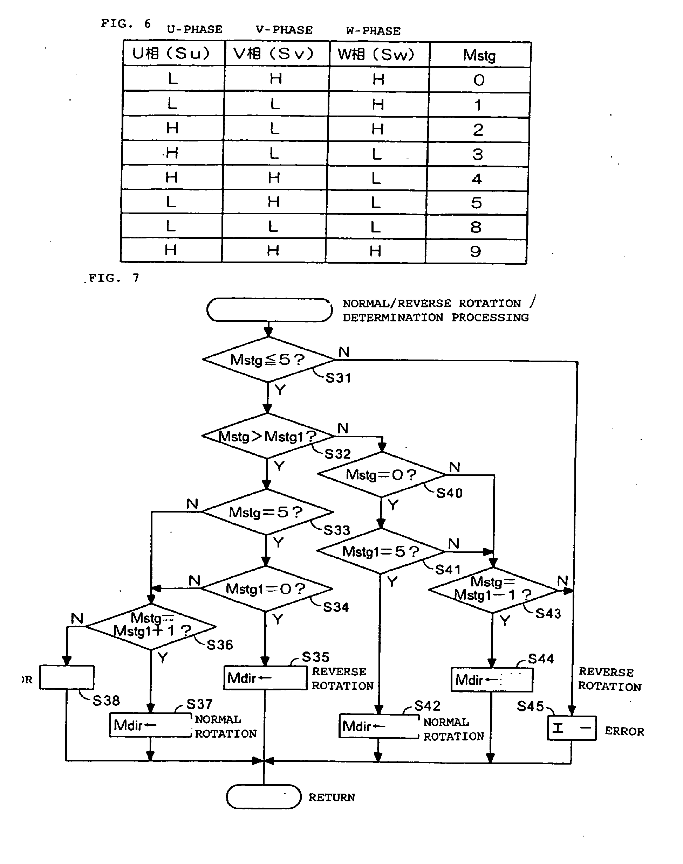

The operation of this preferred embodiment will now be described in detail with reference to the flowcharts. FIG. 4 is a flowchart showing the procedure of "motor stage determination processing" for determining a motor stage (Mstg) representing the rotor position of the ACG starter 50 according to phase signals Su, Sv, and Sw respectively output from the rotor sensors 40U, 40V, and 40W. FIGS. 5 and 6 are a time chart and a table, respectively, showing the relation between the phase signals Su, Sv, and Sw and the motor stage Mstg.

In steps S11 to S17, the output levels of the phase signals Su, Sv, and Sw output from the rotor sensor unit 40 are referred to. If the combination of the output levels of the phase signals Su, Sv, and Sw is "L : H : H", program proceeds to step S18, in which the previous motor stage Mstg1 is updated to the present motor stage Mstg, and the present motor stage Mstg is set to "0".

If the combination of the output levels is "L : H : L", the program proceeds to step S19, in which the previous motor stage Mstg1 is updated to the present motor stage Mstg, and the present motor stage Mstg is set to "5". If the combination of the output levels is "L : L : H", the program proceeds to step S20, in which the previous motor stage Mstg1 is updated to the present motor stage Mstg, and the present motor stage Mstg is set to "1". If the combination of the output levels is "L : L : L", the program proceeds to step S21, in which the previous motor stage Mstg1 is updated to the present motor stage Mstg, and the present motor stage Mstg is set to "8".

If the combination of the output levels is "H : H : H", the program proceeds to step S22, in which the previous motor stage Mstg1 is updated to the present motor stage Mstg, and the present motor stage Mstg is set to "9". If the combination of the output levels is "H : H : L", the program proceeds to step S23, in which the previous motor stage Mstg1 is updated to the present motor stage Mstg, and the present motor stage Mstg is set to "4". If the combination of the output levels is "H : L : H", the program proceeds to step S24, in which the previous motor stage Mstg1 is updated to the present motor stage Mstg, and the present motor stage Mstg is set to "2". If the combination of the output levels is "H : L : L", the program proceeds to step S25, in which the previous motor stage Mstg1 is updated to the present motor stage Mstg, and the present motor stage Mstg is set to "3".

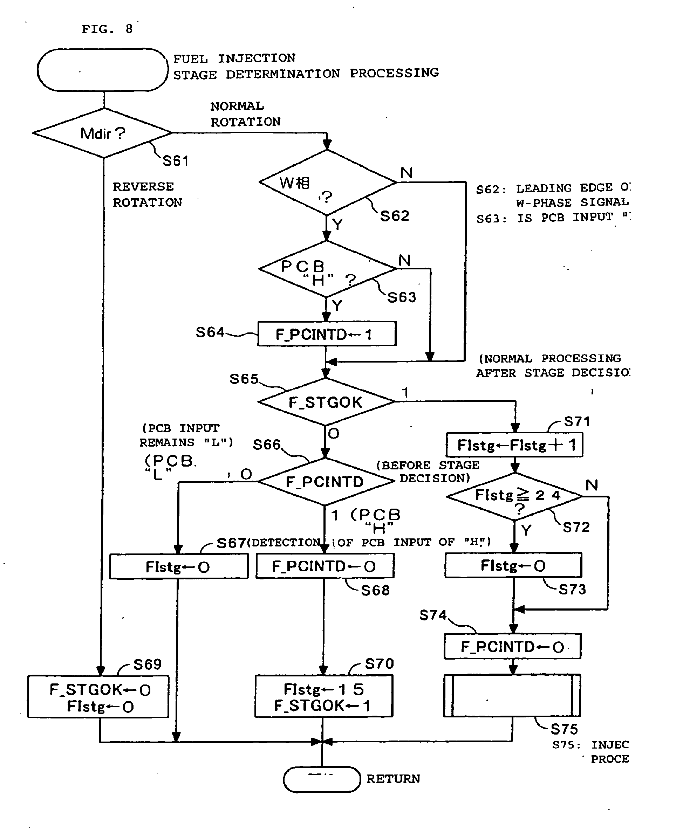

FIG. 7 is a flowchart showing the procedure of "normal/reverse rotation determination processing" for determining the normal/reverse rotation of the engine according to the result of determination of the motor stage Mstg.

In step S31, the present motor stage Mstg is referred to. If the present motor stage Mstg is greater than "5", the program proceeds to step S45 to determine a stage error. If the present motor stage Mstg is less than or equal to "5", the program proceeds to step S32 to compare the present motor stage Mstg with the previous motor stage Mstg1. If Mstg > Mstg1, the program proceeds to step S33 to determine whether or not the present motor stage Mstg is "5". If the present motor stage Mstg is "5", the program proceeds to step S34 to determine whether or not the previous motor stage Mstg1 is "0". If the previous motor stage Mstg1 is "0", the program proceeds to step S35 to determine the reverse rotation.

If the present motor stage Mstg is not "5" in step S33 or the previous motor stage Mstg1 is not "0" in step S34, the program proceeds to step S36 to determine whether or not the present motor stage Mstg is equal to the stage (Mstg1 + 1) next to the previous motor stage Mstg1. If the answer in step S36 is YES, the program proceeds to step S37 to determine the normal rotation, whereas if the answer in step S36 is NO, the program proceeds to step S38 to determine a stage error.

If Mstg > " Mstg1 in step S32, the program proceeds to step S40 to determine whether or not the present motor stage Mstg is "0". If the present motor stage Mstg is "0", the program proceeds to step S41 to determine whether or not the previous motor stage Mstg1 is "5". If the previous motor stage Mstg1 is "5", the program proceeds to step S42 to determine the normal rotation.

If the present motor stage Mstg is not "0" in step S40 or the previous motor stage Mstg1 is not "5" in step S41, the program proceeds to step S43 to determine whether or not the present motor stage Mstg is equal to the stage (Mstg1 - 1) previous to the previous motor stage Mstg1.
If the answer in step S43 is YES, the program proceeds to step S44 to determine the reverse rotation, whereas if the answer in step S43 is NO, the program proceeds to step S45 to determine a stage error.

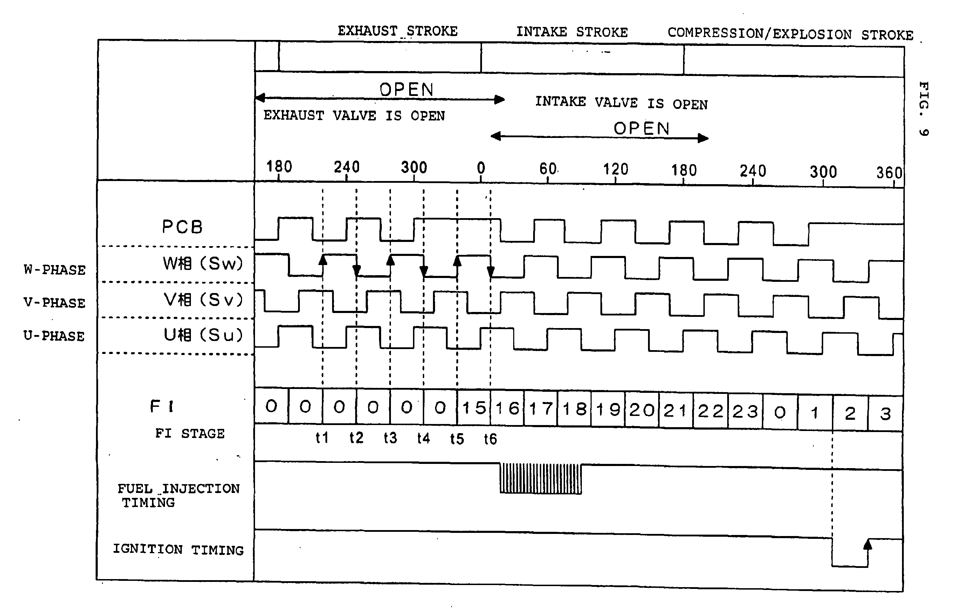

FIGS. 8 and 9 are a flowchart and a timing chart, respectively, showing the procedure of "fuel injection (FI) stage determination processing" for determining a fuel injection stage (FIstg). This "FI stage determination processing" is started at each edge of the phase signal Sw output from the W-phase sensor 40W.

In step S61, the determination result Mdir on the normal/reverse rotation of the engine is referred to. If the normal rotation is determined in step S61, the program proceeds to step S62 to determine whether or not this processing has been started in synchronism with the leading edge of the W-phase signal Sw. If the start timing is synchronous with the timing of the leading edge of the W-phase signal Sw as shown by the time t1 in FIG. 9, the program proceeds to step S63 to determine whether or not the PCB input is at the "H" level. If the PCB input is at the "L" level as at the time t1, the program proceeds to step S65.

In step S65, a stage decision flag F_STGOK is referred to. At this time, it is determined that the FI stage has not yet been decided, and the program therefore proceeds to step S66. In step S66, a crank reference position check flag F_PCINIT is referred to. This crank reference position check flag F_PCINIT is a flag to be set in step S64 if the PCB input is at the "H" level with the timing of the leading edge of the W-phase signal Sw. At this time, it is determined that the crank reference position has not yet been checked, and the program therefore proceeds to step S67. In step S67, the fuel injection stage FIstg is set to "0". Therefore, at the times t2 to t4, the W-phase signal Sw does not rise during the period of the "H" level of the PCB input, so that similar steps are repeated.

At the time t5, the W-phase signal Sw rises during the period of the "H" level of the PCB input, and this rise is detected in steps S62 and S63. As a result, the program proceeds to step S64 to set the crank reference position check flag F_PCINIT. The program next proceeds through steps S65 and S66 to step S68. In step S68, the crank reference position check flag F_PCINIT is reset. In step S70, the fuel injection stage FIstg is set to "15", and the stage decision flag F_STGOK is set.

When the trailing edge of the W-phase signal Sw is detected at the time t6, the program proceeds from step S62 to step S65. In step S65, it is determined that the stage decision flag F_STGOK has been set at this time, so that the program proceeds to step S71. In step S71, the fuel injection stage FIstg is incremented. In step S72, it is determined whether or not the fuel injection stage FIstg is "24" or more. If the fuel injection stage FIstg is "24" or more, the fuel injection stage FIstg is returned to "0" in step S73. In step S74, the crank reference position check flag F_PCINIT is reset. In step S75, "injection processing" is executed to inject fuel with predetermined timing, and an ignition operation for the engine is subsequently performed.

If the determination result Mdir on the normal/reverse rotation of the engine is the "reverse rotation" in step S61, the program proceeds to step S69 to reset the stage decision flag F_STGOK and the fuel injection stage FIstg, and is then ended. In other words, if the reverse rotation of the engine is detected, the fuel injection is inhibited, and the subsequent ignition operation is also inhibited.
30 ... ECU, 31 ... starter relay, 32 ... battery, 33 ... main fuse, 34 ... main relay, 35 ... main switch, 40 ... rotor sensor unit, 50 ... ACG starter

## Claims

1. An engine start control system having a function of reversely rotating a crankshaft of an engine (E) to a predetermined position after stopping said engine (E) for the purpose of standby for the next engine start, said engine start control system comprising:
a fuel injection device (36) for injecting fuel when said crankshaft reaches a predetermined angle;
an ignition device (38) for igniting said engine (E) with predetermined timing after fuel injection by said fuel injection device (36);
a multiphase AC electric device (50) functioning as a starter motor and a generator;
a rotor sensor (40) for detecting a rotor position of said multiphase AC electric device (50) to output multiple phase signals;
rotational direction determining means for determining a rotational direction of said engine (E) according to said phase signals output from said rotor sensor (40); and
injection inhibiting means designed to inhibit the fuel injection when the rotational direction determining means determine a reverse rotation of the engine (E);
the engine start control system being **characterised in that**
said rotational direction determining means comprises:
stage determining means for determining a present rotor position corresponding to any one of first to n-th stages classified according to the combination of said phase signals; and
normal/ reverse rotation determining means for determining the rotational direction of said engine (E) according to the present stage and the previous stage of said rotor.

2. The engine start control system according to claim 1, further comprising ignition inhibiting means for inhibiting ignition to said engine (E) by said ignition device (38) when said engine (E) is reversely rotated.

3. A method for inhibiting the fuel injection in an engine start control system, wherein
a fuel injection device (36) injects fuel when said crankshaft reaches a predetermined angle;
an ignition device (38) ignites said engine (E) with predetermined timing after fuel injection by said fuel injection device (36);
a multiphase AC electric device (50) functions as a starter motor and a generator;
a rotor sensor (40) detects a rotor position of said multiphase AC electric device (50) to output multiple phase signals;
rotational direction determining means determine a rotational direction of said engine (E) according to said phase signals output from said rotor sensor; and
the fuel injection is inhibited when said rotational direction determining means determine a reverse rotation.

4. A vehicle having an engine start control system according to any of the preceding claims.

## Patentansprüche

1. Motorstartsteuersystem mit einer Funktion der umgekehrten Drehung einer Kurbelwelle eines Motors (E) in eine vorgegebene Position nach dem Anhalten des Motors (E) zum Zweck der Betriebsbereitschaft für den nächsten Motorstart, wobei das Motorstartsteuersystem umfasst:
eine Treibstoffeinspritzvorrichtung (36) zur Treibstoffeinspritzung, wenn die Kurbelwelle einen vorbestimmten Winkel erreicht;
eine Zündvorrichtung (38) zur Zündung des Motors (E) mit vorgegebener Taktung nach der Treibstoffeinspritzung durch die Treibstoffeinspritzvorrichtung (36);
eine elektrische Mehrphasen-Wechselstromvorrichtung (50), die als ein Anlassermotor und eine Lichtmaschine fungiert;
ein Rotorsensor (40) zur Detektion einer Rotorstellung der elektrischen Mehrphasen-Wechselstromvorrichtung zur Ausgabe von mehreren Phasensignalen;
ein Drehrichtung-Bestimmungsmittel zur Ermittlung einer Drehrichtung des Motors (E) gemäß den Phasensignalen, die von dem Rotorsensor ausgegeben werden; und
ein Einspritzunterdrückungsmittel, das ausgelegt ist, die Treibstoffeinspritzung zu unterdrücken, wenn das Drehrichtung-Bestimmungsmittel eine umgekehrte Drehung des Motors (E) ermittelt;
wobei das Motorstartsteuersystem **dadurch gekennzeichnet ist, dass**
das Drehrichtung-Bestimmungsmittel umfasst:
Zustand-Bestimmungsmittel zur Ermittlung einer aktuellen Rotorstellung entsprechend irgendeinem aus ersten bis n-ten Zuständen, die gemäß der Kombination der Phasensignale klassifiziert wurden; und
Normal-/Umkehrdrehung-Bestimmungsmittel zur Ermittlung der Drehrichtung des Motors (E) gemäß dem aktuellen Zustand und dem vorhergehenden Zustand des Rotors.

2. Motorstartsteuersystem gemäß Anspruch 1, ferner umfassend Zündunterdrückungsmittel zur Unterdrückung der Zündung des Motors (E) durch die Zündvorrichtung, wenn der Motor (E) in umgekehrte Drehung versetzt wird.

3. Verfahren zur Unterdrückung der Treibstoffeinspritzung in einem Motorstartsteuersystem, worin
eine Treibstoffeinspritzvorrichtung (36) Treibstoff einspritzt, wenn die Kurbelwelle einen vorbestimmten Winkel erreicht;
eine Zündvorrichtung (38) den Motor (E) mit vorgegebener Taktung nach der Treibstoffeinspritzung durch die Treibstoffeinspritzvorrichtung (36) zündet;
eine elektrische Mehrphasen-Wechselstromvorrichtung (50) als ein Anlassermotor und eine Lichtmaschine fungiert;
ein Rotorsensor (40) eine Rotorstellung der elektrischen Mehrphasen-Wechselstromvorrichtung zur Ausgabe von mehreren Phasensignalen detektiert;
ein Drehrichtung-Bestimmungsmittel eine Drehrichtung des Motors (E) gemäß den Phasensignalen, die von dem Rotorsensor ausgegeben werden ermittelt; und
die Treibstoffeinspritzung unterdrückt wird, wenn das Drehrichtung-Bestimmungsmittel eine umgekehrte Drehung ermittelt.

4. Fahrzeug mit einem Motorstartsteuersystem gemäß einem der vorhergehenden Ansprüche.

## Revendications

1. Système de commande de démarrage de moteur ayant pour fonction de faire tourner en sens inverse un vilebrequin d'un moteur (E) jusqu'à une position prédéterminée après l'arrêt dudit moteur (E) dans le but d'attendre le démarrage de moteur suivant, ledit système de commande de démarrage de moteur comprenant:
un dispositif d'injection de carburant (36) pour injecter le carburant lorsque ledit vilebrequin atteint un angle prédéterminé ;
un dispositif de démarrage par allumage (38) pour démarrer par allumage ledit moteur (E) avec une synchronisation prédéterminée après l'injection de carburant par ledit dispositif d'injection de carburant (36) ;
un dispositif électrique à courant alternatif à phases multiples (50) fonctionnant en tant que démarreur et générateur ;
un capteur de rotor (40) pour détecter une position de rotor dudit dispositif électrique à courant alternatif à phases multiples (50) afin de délivrer des signaux à phases multiples ;
des moyens de détermination de sens de rotation pour déterminer un sens de rotation dudit moteur (E) en fonction desdits signaux à phases délivrés par ledit capteur de rotor (40) ; et
des moyens d'inhibition d'injection conçus pour inhiber l'injection de carburant lorsque les moyens de détermination de sens de rotation déterminent une rotation en sens inverse du moteur (E) ;
le système de commande de démarrage de moteur étant **caractérisé en ce que**
lesdits moyens de détermination de sens de rotation comprennent :
des moyens de détermination d'étape pour déterminer une position de rotor présente correspondant à l'un quelconque de premier à n-ème étapes classées en fonction de la combinaison desdits signaux à phases ; et
des moyens de détermination de rotation en sens normal/inverse pour déterminer le sens de rotation dudit moteur (E) en fonction de l'étape présente et de l'étape précédent dudit rotor.

2. Système de commande de démarrage de moteur selon la revendication 1, comprenant, en outre, des moyens d'inhibition de démarrage par allumage pour inhiber le démarrage par allumage dudit moteur (E) par ledit dispositif de démarrage par allumage (38) lorsque ledit moteur (E) est mis en rotation en sens inverse.

3. Procédé pour inhiber l'injection de carburant dans un système de commande de démarrage de moteur, dans lequel
un dispositif d'injection de carburant (36) injecte le carburant lorsque ledit vilebrequin atteint un angle prédéterminé ;
un dispositif de démarrage par allumage (38) démarre par allumage ledit moteur (E) avec une synchronisation prédéterminée après l'injection de carburant par ledit dispositif d'injection de carburant (36);
un dispositif électrique à courant alternatif à phases multiples (50) fonctionne en tant que démarreur et générateur ;
un capteur de rotor (40) détecte une position de rotor dudit dispositif électrique à courant alternatif à phases multiples (50) afin de délivrer des signaux à phases multiples ;
des moyens de détermination de sens de rotation déterminent un sens de rotation dudit moteur (E) en fonction desdits signaux à phases délivrés par ledit capteur de rotor ; et
l'injection de carburant est inhibée lorsque lesdits moyens de détermination de sens de rotation déterminent une rotation en sens inverse.

4. Véhicule comportant un système de commande de démarrage de moteur selon l'une quelconque des revendications précédentes.
